# EUROPÄISCHE PATENTANMELDUNG

(11) **EP 2 141 459 A2**
(43) Veröffentlichungstag der Anmeldung: **06.01.2010**
(21) Anmeldenummer: 09160324.1
(22) Anmeldetag: 15.05.2009
(51) Int. Cl.: G01D 3/032

(54) **Verfahren zur Dämpfung von Resonanzstellen mechanischer Antriebe, vorzugsweise Vorschubantriebe von Werkzeugmaschinen**

(30) Priorität: 02.07.2008 DE 102008031334
(71) Anmelder: Dörries Scharmann Technologie GmbH, 41236 Mönchengladbach (DE)
(72) Erfinder: Hennes, Norbert, 53332 Bornheim (DE); Mirbach, Hermann J., 41844 Wegberg (DE); Brecher, Christian, 52072 Aachen (DE)
(74) Vertreter: Christophersen, Ulrich Rudolf

(57) **Zusammenfassung**

Vorgeschlagen wird ein Verfahren zur Dämpfung von Resonanzstellen mechanischer Antriebe (7), vorzugsweise Vorschubantriebe von Werkzeugmaschinen. Auf dem Signalweg (12, 15) zwischen Ist-Signal-Erfassung (11) und Steuerung (10) des Antriebs (7) wird eine zeitbasierte Filterung (14) des Messsystemsignals (12) innerhalb der Regelungsbandbreite durchgeführt. Damit kann eine deutliche Dämpfung der durch mechanische Einflüsse bedingten Resonanzstellen erzielt werden. Vorzugsweise werden im Zeitbereich mittels eines Phasenmischgatters oder eines Pulsmischgatters die Veränderung der Signalanteile, d. h. die Summe der eingemischten Signale bewirkt die Filterung. Für diese Filterwirkung ist es nicht erforderlich, in die numerische Steuerung (10) des Antriebs (7) einzugreifen.

## Beschreibung

Die Erfindung betrifft ein Verfahren zur Dämpfung von Resonanzstellen mechanischer Antriebe, vorzugsweise Vorschubantriebe von Werkzeugmaschinen.

Werkzeugmaschinen erfordern eine genaue Positionierung des Werkstücks in Bezug auf das Werkzeug oder auch einen Messfühler. Der die Verfahr-, Schwenk- oder Drehbewegung realisierende Antrieb wird durch eine zentrale Steuereinheit, in der Regel eine numerische Steuerung, gesteuert, wobei der Steuereinheit während des translatorischen Verfahrens, des Verschwenkens oder des Drehens fortlaufend Positionssignale (Messsystemsignale) von einer Positionsmesseinrichtung übermittelt werden. Diese Positionsmesseinrichtungen sind häufig inkrementelle (d.h. zählende) Messeinrichtungen. Nach Art der Ausgangssignale wird insoweit unterschieden zwischen Messeinrichtungen mit rechteckförmigen, d.h. quasi digitalisierten, und solchen mit analogen Ausgangssignalen.

In der Praxis können sich aufgrund von Nichtlinearitäten, thermischen Ausdehnungen, Schwingungen etc. Werkstück und Werkzeug in einer Position relativ zueinander befinden, die von jener Position abweicht, welche die Steuereinheit aufgrund der ihr übermittelten Messsignale errechnet. Um die Signalqualität zu erhöhen, und um insbesondere die für den Vorschubantrieb besonders kritischen Frequenzbereiche zu dämpfen, werden bei Werkzeugmaschinen und anderen Produktionsmaschinen Filtersysteme eingesetzt. Unter diesen kritischen Frequenzbereichen versteht man im Allgemeinen jene mit Hilfe von Übertragungsfrequenzgängen zu veranschaulichenden Bereiche, in denen die mechanischen Komponenten Eigenfrequenzen zeigen. In diesen Bereichen zeigt der Amplitudengang entsprechende Überhöhungen oder Vertiefungen. Ähnliches gilt auch für den Phasengang. Hierbei ist eine Positionsregelung nur einsetzbar, bevor der Phasengang auf einen Wert von -180° abfällt.

Wegen der relativ komplexen mechanischen Komponenten einer Werkzeugmaschine können Nebenresonanzen entstehen, bei denen ein Wert von -180° im Phasengang noch nicht erreicht ist. Man spricht in diesem Zusammenhang von Nebenresonanzstellen. Um auch diesen Frequenzbereich nutzbar zu machen, werden Bandsperren in die Signalzweige der Regelungsstruktur eingefügt.

Allgemein gilt bei der Steuerung der Vorschubantriebe von Werkzeugmaschinen der Grundsatz, die Filtersysteme außerhalb der Regelungsbandbreite zu nutzen, da es anderenfalls zu einer Verfälschung der Signale und somit zu einer Beeinträchtigung der Dynamik des Vorschubantriebs kommt. Der Einsatz entsprechender Filtersysteme ist daher bei Maschinen- und Antriebskomponentenherstellern weit verbreitet.

Aus der DE 199 50 902 A1 ist ein Verfahren zur Steuerung eines Vorschubantriebs einer Werkzeugmaschine bekannt, bei der kein unmittelbarer Eingriff in die Steuerung des Antriebs der Werkzeugmaschine erfolgt, sondern die zu filternden Signalanteile mit dem gemessenen Ist-Signal verrechnet werden, um so die gewünschte Signalfilterung zu erreichen. Das Verfahren nach der DE 199 50 902 A1 setzt eine Phasenmischvorrichtung ein, in welcher der Einmischvorgang als eine Summationsfunktion interpretiert wird. Der Grundgedanke ist dabei, die von der jeweiligen Positionsmesseinrichtung gelieferten Positionssignale, noch bevor diese zur Steuereinheit gelangen, nach vorgegebenen Kriterien zu verändern und nur die so veränderten Positionssignale der Steuereinheit zuzuleiten. Auf diese Weise lassen sich Abweichungen zwischen der gemessenen und der tatsächlichen Position des zu steuernden Werkzeugs oder Werkstücks korrigieren. Bei dem Verfahren nach der DE 199 50 902 A1 erfolgt dies, indem den von einer inkrementellen Positionsmesseinrichtung erzeugten Ausgangssignalen vor der Zuleitung zur Steuereinheit trigonometrische Korrekturwinkel beigemischt werden, um so eine Filterfunktion zu realisieren.

Der Erfindung liegt die **Aufgabe** zugrunde, bei der Steuerung eines Antriebs, insbesondere eines Vorschubantriebs einer Werkzeugmaschine, am Messsystemsignal eine Filterung durchzuführen, welche unabhängig von der eigentlichen Steuerung des Vorschubantriebs nur die erfassten Rohsignale benötigt, und diese in der Rohsignalform der nachfolgenden Steuerung wieder zur Verfügung stellt.

Zur **Lösung** dieser Aufgabe wird ein Verfahren mit den in Patentanspruch 1 angegebenen Merkmalen vorgeschlagen.

Erfindungsgemäß erfolgt eine zeitbasierte Filterung der Messsystemsignale auf dem Signalweg des gemessenen Ist-Signals, und zwar innerhalb der Regelungsbandbreite. Damit kann eine deutliche Dämpfung der durch mechanische Einflüsse bedingten Resonanzstellen erzielt werden. Erreicht wird dies durch eine Art Mischgatter im Messsystemsignal, welches die entsprechenden Signalanteile manipuliert, um im Zeitbereich eine Filterung zu realisieren. Im Zeitbereich werden mittels des Phasenmischgatters oder auch eines Pulsmischgatters die Signalanteile der zu dämpfenden Frequenzpunkte entsprechend verändert, d.h. die Summe der eingemischten Signale bewirkt die Filterung. Diese Filterwirkung entsteht, ohne dass in die nachgeschaltete numerische Steuerung des Vorschubantriebs eingegriffen wird.

Bevorzugte Ausgestaltungen des erfindungsgemäßen Verfahrens sind in den Unteransprüchen angegeben.

Das Verfahren wird im Folgenden anhand von Darstellungen näher und unter Angabe weiterer Vorteile erläutert. In den Darstellungen zeigen:
- Figur 1: eine schematische Darstellung der Steuerung des Vorschubantriebs einer Werkzeugmaschine;
- Figur 2: ein Prinzipschaubild der verwendeten Phasenmischeinrichtung (PxMG);
- Figur 3: in einem Prinzipschaubild die Bedämpfung einer Resonanzstelle eines Messsystemsignals mittels Bandsperre;
- Figur 4: in einer Variante zur Figur 3 die Bedämpfung verschiedener Resonanzstellen unter Einsatz mehrerer Bandsperren;
- Figur 5: in einer weiterentwickelten Variante zur Figur 4 den zusätzlichen Einsatz eines Tiefpassfilters;
- Figur 6: in einem Prinzipschaubild eine weitere Variante, bei der die Bedämpfung einer Resonanzstelle mittels eines Bandpassfilters erfolgt;
- Figur 7: in einer Variante zu Figur 6 eine Erweiterung auf mehrere Resonanzüberhöhungen;
- Figur 8: in einer weiteren Variante den Einsatz zweier Tiefpassfilter;
- Figur 9: eine weitere Variante unter Einsatz eines Algorithmus nach dem Prinzip des gleitenden Mittelwertes;
- Figur 10: eine weitere Variante mit direkter Berücksichtigung des Einmischwertes in der Leistungsbilanz;
- Figur 11: ein Prinzipschaubild einer Funktionssequenz unter Einsatz einer aktiven Filterstruktur (AFS) und
- Figur 12: eine auf dem Prinzip Schaubild nach Fig. 3 aufbauende Darstellung mit Veränderung der Filtercharakteristik.

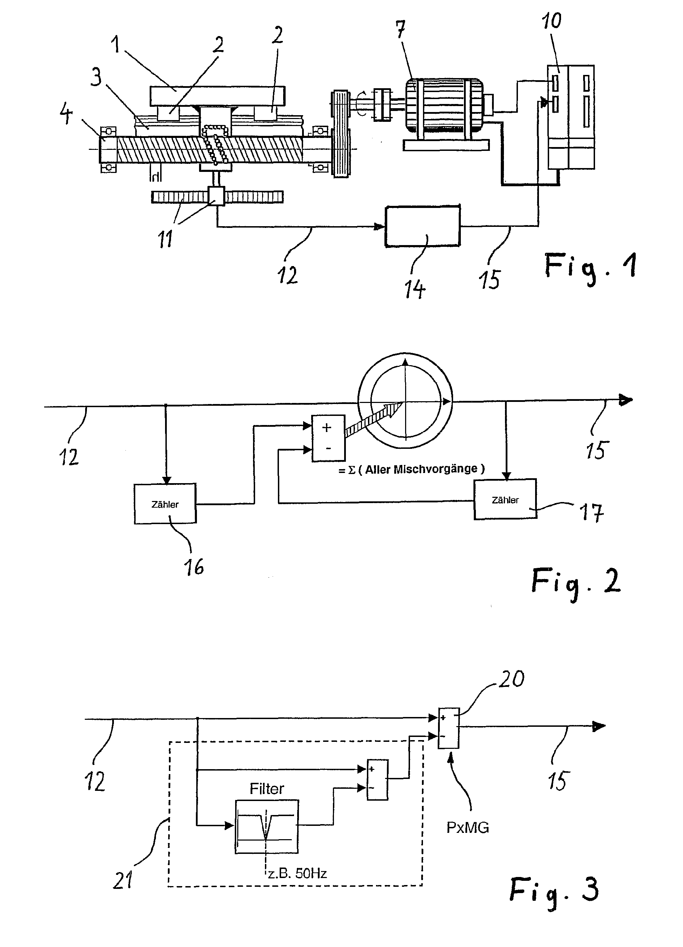

In Figur 1 ist stark schematisch der elektrische Vorschubantrieb für eine Werkzeugmaschine dargestellt. Ein das Werkstück oder auch das Werkzeug aufnehmender Maschinentisch 1 ist mit einer Linearführung 2 auf einem stationären Maschinenbett 3 längsbeweglich verfahrbar abgestützt. Bestandteil der Werkzeugmaschine ist ferner eine Spindel 4, hier eine Kugel-Rollspindel, zur Umsetzung einer Antriebsdrehbewegung in die translatorische Bewegung des Maschinentischs 1. Der Antrieb der Spindel 4 erfolgt durch einen Elektromotor 7, einen Linearmotor oder einen Hydraulikantrieb, sowie über geeignete, zwischengeschaltete Getriebe 8. Dies können z. B. Kugelgewindetriebe sein oder Ritzel-/Zahnradpaarungen.

Die Steuerung 10 des Antriebs 7 der Werkzeugmaschine beinhaltet u.a. einen Umrichter und die für die Steuerung erforderliche Regelungsstruktur. Zur Positionsbestimmung ist mit dem Maschinentisch 1 ein z.B. mit einem Messgitter oder einem Abtastkopf arbeitendes, direktes Positionsmesssystem 11 verbunden. Über eine Signalleitung gelangt das Messsystemsignal 12 von dem Positionsmesssystem 11 zu der Motorsteuerung 10. Im Signalweg 12, 15 zwischen Messsystem 11 und Steuerung 10 befindet sich als Filter 14 eine aktive Filterstruktur (acitve filter structure AFS).

Über das im Folgenden noch beschriebene Steuerungs- und Regelungssystem wird der Vorschub der Werkzeugmaschine drehzahl- und positionsgeregelt. Mit dem hierbei verwendeten, direkten Positionsmesssystem 11 lassen sich auch die Eigenschwingungsformen und Eigenschwingungsfrequenzen des mechanischen Antriebssystems ermitteln, die somit als Information im modifizierten Messsystemsignal 15, d.h. hinter der aktiven Filterstruktur (AFS) 14 zur Verfügung stehen. Nur das modifizierte Messsystemsignal 15 gelangt zur weiteren Signalverarbeitung an die Steuerung 10, womit der Positionsregelkreis geschlossen ist. Alternativ kann die aktive Filterstruktur 14 auch in den Drehzahlregelkreis integriert sein.

In Fig. 2 ist das Prinzip der Phasenmischvorrichtung (kurz PxMG) illustriert, wie sie z. B. in der DE 199 50 902 A1 beschrieben ist. Hierbei wird der Mischvorgang als eine Summationsfunktion interpretiert. In den weiteren Prinzipschaubildern (Fign. 3 bis 5) wird daher die Phasenmischvorrichtung PxMG nur noch als ein Summenglied dargestellt. Diese Darstellung ist zudem insofern zweckmäßig, als die Phasenmischvorrichtung die Positionssignale vor und nach dem Mischvorgang ermittelt, und über die Filterstruktur verrechnet. Die konkrete Filterung kann somit, wie in Fig. 2 illustriert, als Summe aller einzumischenden Signalanteile aufgefasst werden. Es entsteht ein integrales Verhalten, welches in der Ansteuerung des Einmischvorgangs berücksichtigt werden muss. Daher wird der Vorgang im Weiteren nur noch als Summation dargestellt.

Gemäß der in Fig. 3 dargestellten Struktur wird mit der Approximation als Summation eine Filterung des Messsystemsignals möglich, indem zwischen Messsystemsignal 12 und modifiziertem Messsystemsignal 15 eine Zeitbereichssubtraktion 21 bzw. Zeitbereichsaddition mit den zu filternden Signalen erfolgt. Aus Fig. 3 ersichtlich ist auch die Filterstruktur, mit welcher eine dämpfende Wirkung auf die Resonanzüberhöhungen im Frequenzgang des Werkzeugmaschinen-Vorschubsystems möglich ist.

Die Funktion wird im Folgenden anhand eines Beispiels erläutert:
Der Übertragungsfrequenzgang des Vorschubsystems weist eine Resonanzüberhöhung mit einer hier als Beispiel angenommenen Frequenz von 50 Hz auf. Gemäß der Darstellung in Fig. 3 wird die Bandsperre in der Anordnung auf dieselbe Frequenz von hier 50 Hz eingestellt, oder auf eine andere, passende Frequenz. Die Phasenmischvorrichtung 20 ermittelt über einen Eingangsinterpolator die direkte Position des Maschinentischs 1 (Fig. 1), welche identisch zu der in der Steuerung ermittelten Position ist. Sie wird mit einer Taktzeit von z. B. 1 kHz ermittelt und einer auf einem separaten digitalen Signalprozessor (DSP) ausgeführten Berechnung der Filterung zugeleitet. Bei dieser Berechnung wird die in Fig. 3 gestrichelt dargestellte Zeitbereichssubtraktion 21 durchgeführt, wodurch der Phasenmischvorrichtung 20 nur die zu filternden Zeitbereichssignale zur Verfügung stehen. Diese Signale werden dann in der Phasenmischvorrichtung 20 durch den Einmischvorgang von dem unveränderten Messsystemsignal 12 subtrahiert, wodurch das modifizierte Messsystemsignal 15 entsteht, in welchem die Frequenzanteile der Resonanzüberhöhung entscheidend gedämpft vorliegen. Dieser Vorgang entspricht dem einer Filterung.

Da der Positionsregelkreis, insbesondere der Positionsregler, keine Rückmeldung über gefilterte Frequenzanteile erhält, werden diese bei einer Positionsänderung oder bei mechanischen Schwingungen durch ein aktives Gegenregeln nicht angeregt. Es kommt somit zu einer Erhöhung der nutzbaren Bandbreite des Vorschubsystems, da die Filterung auch innerhalb der Regelungsbandbreite liegen kann.

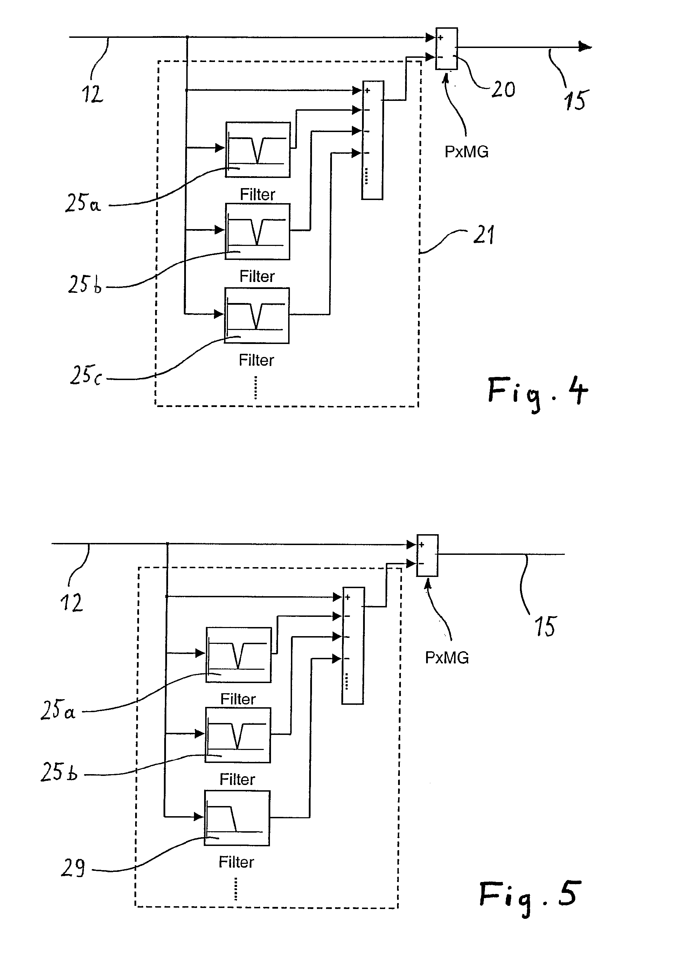

Die Erfindung bietet nicht nur die in Fig. 3 illustrierte Möglichkeit, eine einzelne Resonanzüberhöhung durch eine Filterung zu bedämpfen, sondern es ist gemäß Fig. 4 durch eine Parallelanordnung mehrerer Bandsperren 25a, 25b, 25c möglich, weitere Resonanzen zu filtern. Randbedingung für diesen Einsatz ist das Vorhandensein von mehreren Resonanzüberhöhungen, zwischen denen ein ausreichender Frequenzabstand besteht.

Die Bedämpfung verschiedener Resonanzstellen nach Fig. 4 kann gemäß Fig. 5 noch um eine Tiefpassfilterung 29 ergänzt werden. Die Tiefpassfilterung erlaubt zwischen unterschiedlichen Resonanzstellen eine direkte Abgrenzung, und eine Begrenzung der Filterung im Frequenzbereich. Dies beinhaltet auch alternative Filteranordnungen und Filtervarianten, für welche der in Fig. 5 wiedergegebene Tiefpass 29 nur eine beispielhafte Möglichkeit ist.

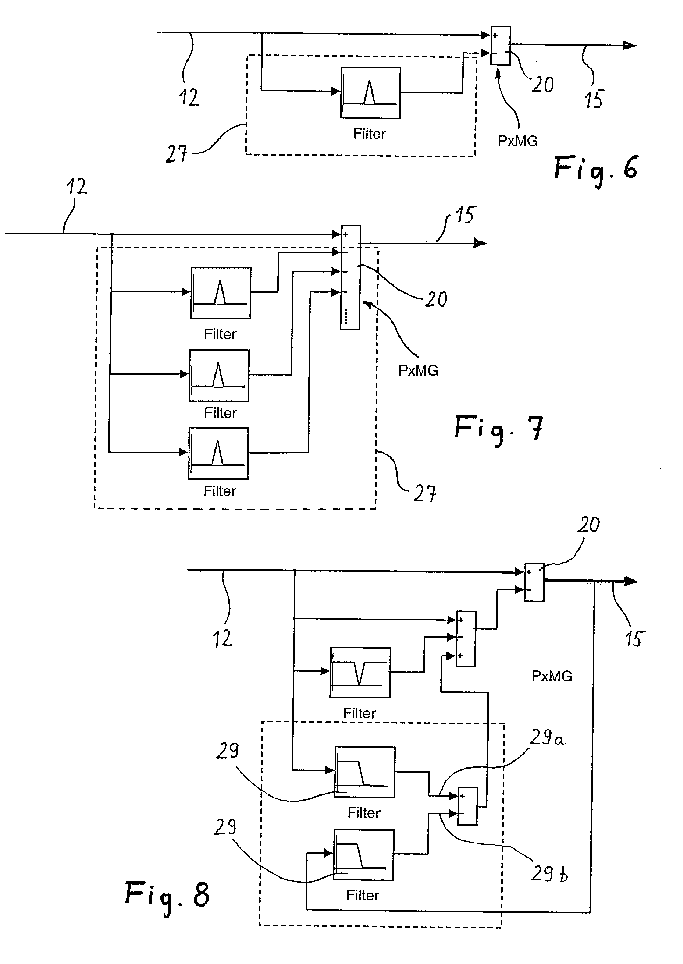

Gemäß Fig. 6 ist im Rahmen der Erfindung alternativ eine Filterstruktur anwendbar, bei der nicht über eine Bandsperre ein Frequenzbereich aus dem Messsystemsignal entfernt wird, sondern stattdessen nach der Auswertung durch den Eingangsinterpolator ein Bandpassfilter angeschlossen ist. Der in Fig. 6 gestrichelt dargestellte Bandpassfilter 27 ermittelt den Frequenzbereich der Resonanzüberhöhung, und entfernt diesen direkt über den Einmischvorgang aus dem Messsystemsignal 12. Die erreichte Filterwirkung ist ähnlich jener gemäß Fig. 3.

In weiterer Ausgestaltung des Verfahrens ist gemäß Fig. 7 die Filterung über Bandpassfilter 27 auch auf mehrere Resonanzüberhöhungen erweiterbar, analog der Ausführungsform nach Fig. 4.

Wird die angestrebte Filterung innerhalb der Reglerbandbreite genutzt, so entsteht ein Fehler in der Leistungsbilanz des Messsystemsignals zwischen Eingangs- und Ausgangsinterpolator des Phasenmischprozesses. Dieser Fehler wirkt sich als direkter Positionsfehler aus. Es besteht jedoch die Möglichkeit, die Differenz über den Eingangs- bzw. den Ausgangsinterpolator zu ermitteln. Eine Möglichkeit der Korrektur zeigt das Prinzipschaubild Fig. 8. Es werden zwei gleichartige Tiefpassfilter 29 eingesetzt, deren Grenzfrequenz unterhalb der zu filternden Resonanzüberhöhungen liegt, und die nicht durch diese beeinträchtigt werden. Die Signale 29a, 29b an den Ausgängen der Tiefpassfilter 29 unterscheiden sich damit nur im Gleichanteil, und die Differenz entspricht dem entstandenen Positionsfehler. Die Differenz wird nun als konstanter Offset in der Phasenmischvorrichtung 20 berücksichtigt und gleicht den entstandenen Fehler aus.

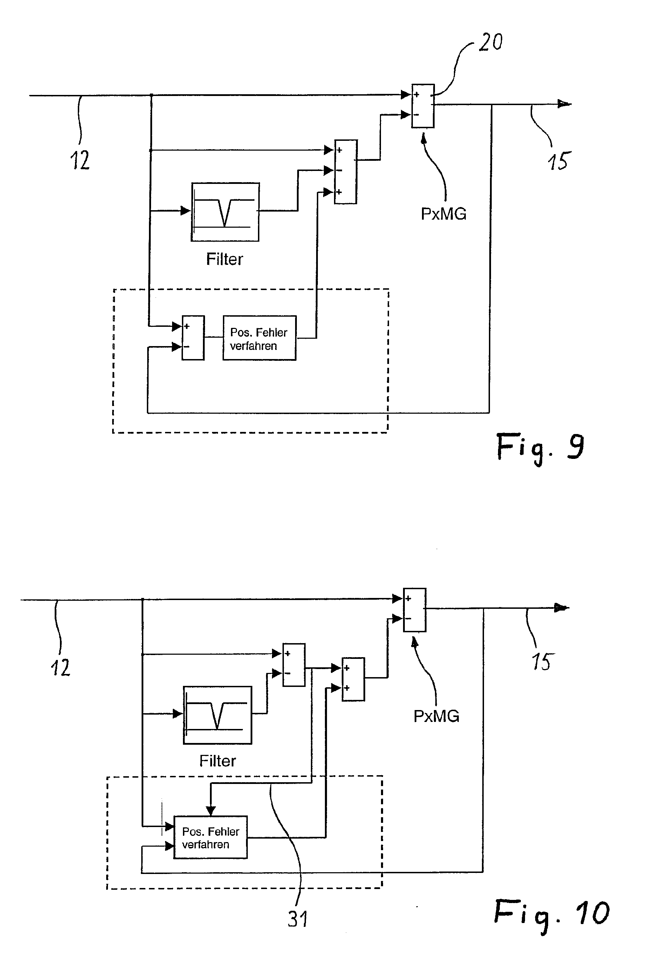

Es sind auch andere Verfahren einsetzbar, um den entstehenden Positionsfehler zu beseitigen. Hierzu zählen die in Fig. 9 als Alternative zu Fig. 8 dargestellte Ermittlung der Fehlerwerte durch einen Algorithmus nach dem Prinzip des gleitenden Mittelwertes, und die Ermittlung des Fehlerwertes durch eine direkte Berücksichtigung des Einmischwertes 31 in der Leistungsbilanz, wie in Fig. 10 dargestellt.

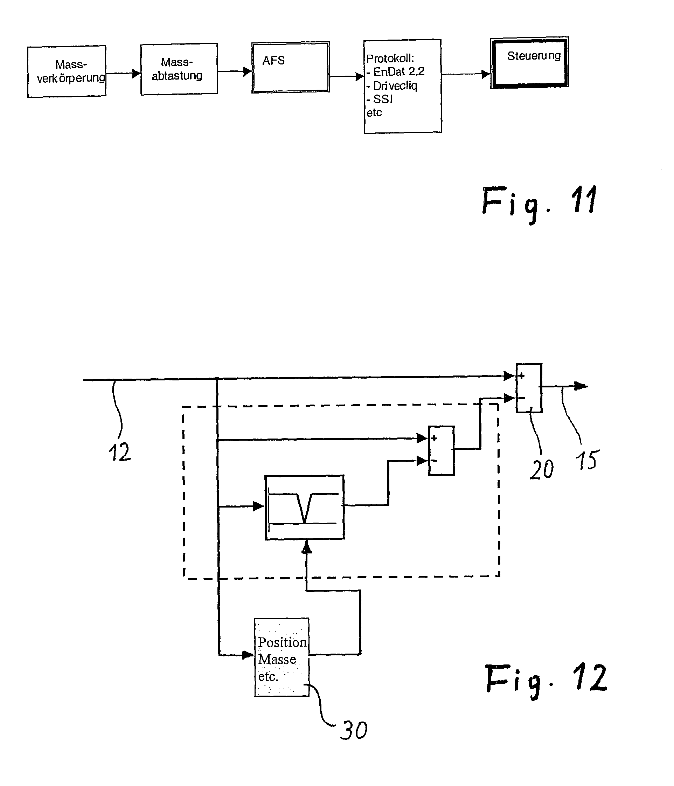

Für das zeitbasierte Filterungsverfahren ist die Nutzung verschiedener Messsystemsignale 12 möglich, hierzu zählen analoge 1 Vss-Signale sowie TTL-Signale, aber auch kombinierte analog-digitale Übertragungen, etwa über den EnDat Standard oder den Dri vecliq Standard (Standard der Siemens AG). Durch Integration der aktiven Filterstruktur (AFS) direkt in das Messsystem wird das Verfahren unabhängig von der Steuerung und der Art des Messsystems, sei dies linear oder z. B. rotatorisch. Das Verfahren eignet sich, da direkt in das Messsystem eingebaut, somit auch für digitale Signalübertragungsverfahren. Als Beispiel zeigt Fig. 11 die mögliche Anordnung und die Unabhängigkeit von der Signalübertragung für den Fall, dass die aktive Filterstruktur AFS in ein Messsystem integriert ist.

In Fig. 12 ist in Abwandlung der Filterung nach Fig. 3 der zusätzliche Einsatz einer positionsabhängigen Filtercharakteristik 30 dargestellt. In einer Werkzeugmaschine können, z. B. wenn die örtlichen Positionen der Arbeitsbereiche wechseln oder sich verändern, auch die Eigenschwingungsformen variieren, d. h. sich hinsichtlich Amplitude/Phase und Frequenz ändern. Die erfindungsgemäße Filterung kann eine solche Änderung der Charakteristik kompensieren, indem die Filter für einzelne Verfahrstrecken oder Bewegungsbereiche der Werkzeugmaschine entweder verändert werden, oder zwischen verschiedenen Filtern gewechselt bzw. umgeschaltet wird.

Die Filtercharakteristik 30 kann auch fremdsignalabhängig oder adaptiv, d. h. selbstlernend, sein.

Bei der fremdsignalabhängigen Filtercharakteristik können Einflussgrößen wie Masse bzw. Gewicht, Trägheitsmoment, bewegungsprofilabhängige Filterzustände etc. berücksichtigt werden.

Beim Einsatz einer adaptiven Filtercharakteristik wird ausgenutzt, dass sich die Qualität der Filterung detektieren lässt, da die Eingangssignale (Ist-Wert-Ermittlung) und die Ausgangssignale (Korrekturwert-Ermittlung), sowie die einzumischenden Signale direkt zur Verfügung stehen. Auf deren Grundlage lässt sich über Korrelationsfunktionen die Amplitude der relevanten Frequenzanteile als Gütemaß der Filterung detektieren, und die Filterkomponenten werden über dieses Gütemaß verändert.

### Bezugszeichenliste

- 1: Maschinentisch
- 2: Linearführung
- 3: Maschinenbett
- 4: Spindel
- 7: Motor, Antrieb
- 8: Getriebe
- 10: Steuerung
- 11: Positionsmesssystem
- 12: Messsystemsignal
- 14: Filter, aktive Filterstruktur
- 15: modifiziertes Messsystemsignal
- 16: Zähler
- 17: Zähler
- 20: Phasenmischvorrichtung, Phasenmischgatter
- 21: Zeitbereichssubtraktion
- 25a: Bandsperre
- 25b: Bandsperre
- 25c: Bandsperre
- 27: Bandpassfilter
- 29: Tiefpassfilter
- 29a: Signal
- 29b: Signal
- 30: Filtercharakteristik
- 31: Einmischwert

## Patentansprüche

1. Verfahren zur Dämpfung von Resonanzstellen mechanischer Antriebe (7), vorzugsweise Vorschubantriebe von Werkzeugmaschinen,
**dadurch gekennzeichnet,**
**dass** auf dem Signalweg (12, 15) zwischen Ist-Signal-Erfassung (11) und Steuerung (10) des Antriebs (7) eine zeitbasierte Filterung (14) des Messsystemsignals (12) innerhalb der Regelungsbandbreite durchgeführt wird.

2. Verfahren nach Anspruch 1, **dadurch gekennzeichnet, dass** zur Filterung im Zeitbereich ein Phasenmischgatter (20) oder ein Pulsmischgatter eingesetzt wird.

3. Verfahren nach Anspruch 2, **dadurch gekennzeichnet, dass** zwischen dem Messsystemsignal (12) und einem der Steuerung (10) zur Verfügung gestellten modifizierten Messsystemsignal (15) eine Zeitbereichssummation bzw. Zeitbereichssubtraktion durchgeführt wird.

4. Verfahren nach einem der Ansprüche 1 bis 3, **gekennzeichnet durch** den Einsatz einer oder mehrerer Bandsperren (25a, 25b, 25c).

5. Verfahren nach Anspruch 4, **gekennzeichnet durch** den zusätzlichen Einsatz eines Tiefpassfilters (29).

6. Verfahren nach einem der Ansprüche 1 bis 3, **gekennzeichnet durch** Einsatz eines oder mehrerer Bandpassfilter (27).
